# EUROPÄISCHE PATENTSCHRIFT

(11) **EP 1 908 670 B1**
(45) Veröffentlichungstag und Bekanntmachung des Hinweises auf die Patenterteilung: **15.02.2012**
(21) Anmeldenummer: 07450173.5
(22) Anmeldetag: 04.10.2007
(51) Int. Cl.: B62D 27/02, B62D 33/00

(54) **Knotenblech zum Verbinden von drei im Winkel zueinander stehenden Profilen eines Ladeflächenaufbaus für Lastfahrzeuge**
Gusset plate for connecting three profiles at an angle to each other for the cargo area superstructure of lorries
Plaque de renforcement destinée à relier trois profils se trouvant l'un contre l'autre dans l'angle d'une construction de surface de chargement pour camions

(30) Priorität: 04.10.2006 AT 16652006
(43) Veröffentlichungstag der Anmeldung: 09.04.2008
(73) Patentinhaber: LLE Vertriebs GmbH, 7343 Neutal (AT)
(72) Erfinder: Rathmanner, Hermann, 7372 Drassmarkt (AT)
(74) Vertreter: Schwarz & Partner

(56) Entgegenhaltungen:
- WO-A-99/62752
- AU-B2- 517 487
- DE-A1- 2 728 450
- US-A- 1 629 278
- US-A- 2 080 764

## Beschreibung

Die Erfindung betrifft ein Knotenblech zum Verbinden von drei im Winkel zueinander stehenden Profilen eines Ladeflächenaufbaus für Lastfahrzeuge, wobei das Knotenblech ein von zwei Seitenteilen gebildetes Winkelprofil zum Befestigen, vorzugsweise zum mechanischen Befestigen, an einem die Vertikalkräfte des Ladeflächenaufbaus in die Ladefläche leitenden Stützprofilen aufweist sowie ein Set zum Selbstbau eines Ladeflächenaufbaus und einen Ladeflächenaufbau. Ladeflächenaufbauten werden insbesondere für Pritschenfahrzeuge zum Transport von Langgütern eingesetzt.

Ein Knotenblech dieser Art ist aus der US 5,071,185 A1 bekannt. Dieses Knotenblech dient als Teil einer Angel zum Einhängen von Bordbegrenzungen für Ladeflächen von Lastkraftwagen.

Ein Knotenblech, welches den Oberbegriff des Anspruchs 1 zeigt, ist aus DE 27 28 450 bekannt.

Ladeflächenaufbauten für Lastfahrzeuge, wie z.B. Pritschenfahrzeuge, sind in der Regel als Schweißkonstruktionen ausgebildet. Nachteilig ist hierbei, dass für die Herstellung eines solchen Ladeflächenaufbaus eine Schlosserwerkstatt aufgesucht werden muss, und zwar erstens zum Vermessen der Ladefläche und zweitens nach Fertigstellung des Ladeflächenaufbaus zu dessen Abholung, da ein Versenden eines solchen Ladeflächenaufbaus, der ein großes Volumen einnimmt, unrentabel und oftmals auch gar nicht möglich ist.

Die Erfindung bezweckt die Vermeidung dieser Nachteile und Schwierigkeiten und stellt sich die Aufgabe, eine Einrichtung zu schaffen, die es ermöglicht, Ladeflächenaufbauten in Breite, Länge und Höhe in einfacher Weise an die Erfordernisse anzupassen, wobei es möglich sein soll, dass ein Zusammenbau eines Ladeflächenaufbaus ohne die Durchführung von Schweißarbeiten möglich ist. Insbesondere sollen Ladeflächenaufbauten von Kunden selbst unter Zukauf der Einzelteile einfach und kostengünstig herstellbar sein.

Diese Aufgabe wird dadurch gelöst, dass das Knotenblech in Verlängerung der beiden Seitenteile Seitenlaschen zum Befestigen, vorzugsweise mechanischen Befestigen, von sich etwa horizontal erstreckenden Tragprofilen aufweist, wobei jede der Seitenlaschen mit einer Auflagelasche zur Auflage der sich etwa horizontal erstreckenden Tragprofile versehen ist.

Ein solches Knotenblech ist einstückig als Blechformteil gestaltet, wodurch eine besonders einfache Herstellung gesichert ist.

Eine besondere Ausführungsform des Knotenblechs gemäß der eine besonders sichere Verbindung der Profile gewährleistet ist, ist dadurch gekennzeichnet, dass mindestens eine Seitenlasche eine zur Auflagelasche parallel liegende Decklasche zum U-förmigen Umfassen eines Tragprofils aufweist, wobei zweckmäßig ein Seitenteil mit einer parallel zum anderen Seitenteil gerichteten Stützlasche zum U-förmigen Umfassen eines Stützprofils versehen ist.

Eine höhere Festigkeit eines Knotenblechs ist dann gegeben, wenn die Seitenlaschen in die Seitenteile abgerundet übergehen.

Eine bevorzugte Ausführungsform ist dadurch gekennzeichnet, dass die Seitenlaschen an den Seitenteilen in ungleichen Ebenen, d.h. höhenversetzt, angeordnet sind.
Vorzugsweise sind in dem Knotenblech bereits zum mechanischen Befestigen von Stütz- oder Tragprofilen in den Seitenteilen und Seitenlaschen Bohrungen vorhanden.

Eine weitere bevorzugte Ausführungsform ist gekennzeichnet durch einen an der Außenseite einer Seitenlasche befestigten Schnellverschluss, dessen Haltebügel die Oberkante der Seitenlasche überragt.

Ein Set zum Selbstbau eines Ladeflächenaufbaus für Lastfahrzeuge ergibt sich durch vier gegengleich gestaltete Knotenbleche, sodass ein solcher Ladeflächenaufbau von vier Stützprofilen und vier Tragprofilen gebildet werden kann.

Vorzugsweise ist ein solches Set dadurch gekennzeichent, dass weiters Fußteile für die Stützprofile vorgesehen sind, die an der Ladefläche befestigbare, vorzugsweise mechanisch befestigbare, Bodenplatten und von diesen aufragende, vorzugsweise einen U-Querschnitt aufweisende Seitenteile zur Befestigung, vorzugsweise mechanischen Befestigung, der Stützprofile aufweist.

Eine bevorzugte Variante ist dadurch gekennzeichnet, dass es weitere Knotenbleche mit vorzugsweise ein U-Profil bildenden Seitenteilen und nur einer von einem Seitenteil auskragenden Seitenlasche, von der vorzugsweise eine Auflagelasche auskragt, aufweist, wobei gemäß einer weiteren Variante zwei oder mehrere ein Stützprofil U-förmig umgreifende Befestigungsteile zur Montage eines Heckscheibenschutzes vorgesehen sind.

Ein Ladeflächenaufbau weist vorzugsweise vier Stützprofile auf, die über die Knotenbleche nach oben ragen, wodurch Ladegut gegen seitliches Abrutschen gesichert ist.

Vorzugsweise enden die Knotenbleche mit sich in Querrichtung zum Lastfahrzeug erstreckenden Tragprofilen, d.h., dass die Knotenbleche diese Tragprofile höhenmäßig nicht überragen.

Weiters sind zwecks einfacher Beladung des Ladeflächenaufbaus mit einem Gabelstapler vorzugsweise sich in Längsrichtung des Lastfahrzeuges erstreckende Tragprofile tiefer vorgesehen als sich quer zur Längsrichtung des Lastfahrzeugs erstreckende Tragprofile.

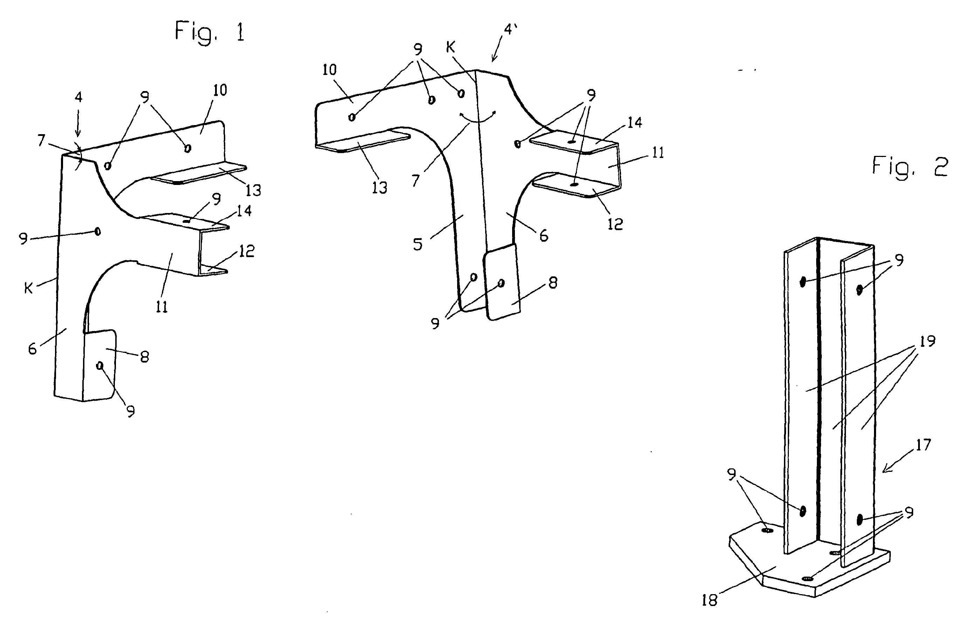

Die Erfindung ist nachfolgend anhand eines in der Zeichnung dargestellten Ausführungsbeispiels näher erläutert. Fig. 1 veranschaulicht zwei spiegelbildlich gegengleich gestaltete Knotenbleche und Fig. 2 einen Fußteil in Schrägrissansicht.

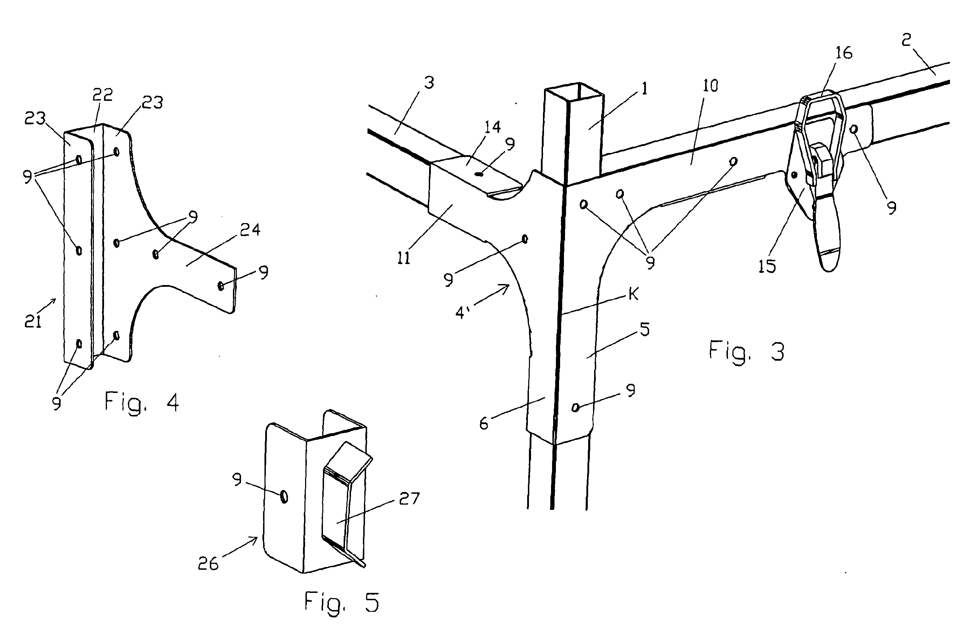

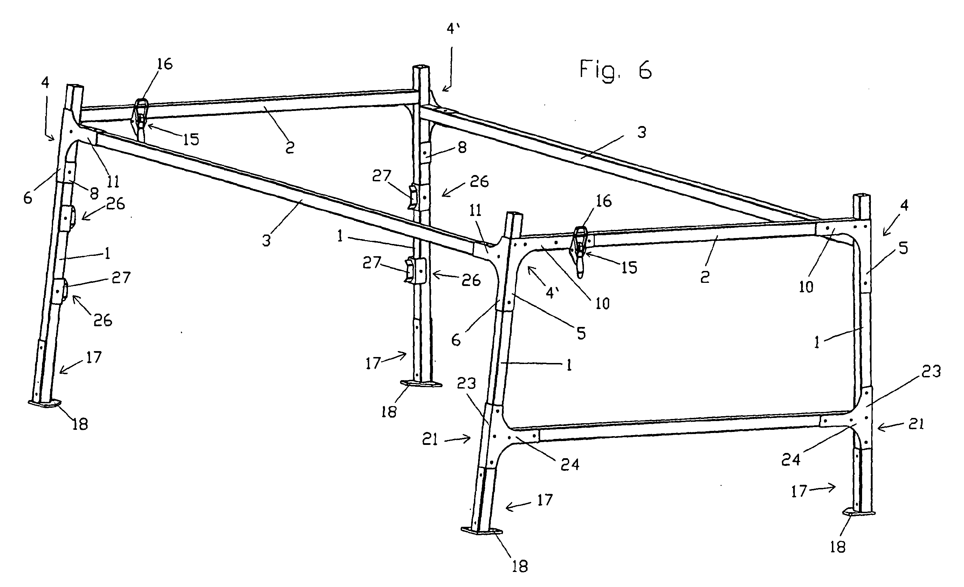

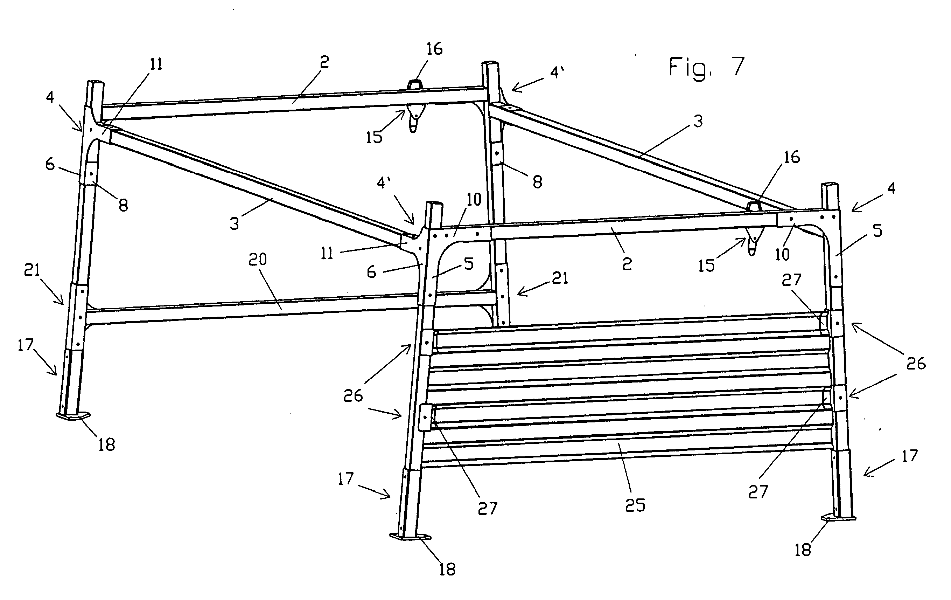

Fig. 3 veranschaulicht die Anordnung eines Knotenblechs mit einem Stütz- und zwei Tragprofilen, ebenfalls im Schrägriss. Die Fig. 4 und 5 zeigen optional vorzusehendes Zubehör in Schrägrissdarstellung. Die Fig. 6 und 7 veranschaulichen einen Ladeflächenaufbau unter Verwendung der erfindungsgemäßen Knotenbleche sowie des Zubehörs, wiederum in Schrägrissdarstellung.

Um einen Ladeflächenaufbau, wie er in Fig. 6 veranschaulicht ist, in einfacher Weise und ohne Schweißarbeiten durchführen zu müssen, genau nach den gewünschten Abmessungen zusammenbauen zu können, sind zur Verbindung der die Lasten in die Ladefläche eines Lastfahrzeuges einleitenden Stützprofile 1 und der etwa horizontal gerichteten und die Lasten tragenden Tragprofile 2, 3 Knotenbleche 4, 4', wie sie in Fig. 1 im Detail veranschaulicht sind, vorgesehen.

Jedes Knotenblech 4, 4' weist zwei im Winkel 7 zueinander gerichtete Seitenteile 5, 6 auf, wobei der Winkel 7, den diese Seitenteile 5, 6 miteinander einschließen, an das Stützprofil 1, an dem das Knotenblech 4, 4' zu montieren ist, angepasst ist, sodass die beiden Seitenteile 5, 6 an den Seitenflächen des Stützprofils 1 gut anliegen. Der Seitenteil 6 weist noch eine Stützlasche 8 auf, die derart vorgesehen ist, dass das Stützprofil 1 nicht nur von den beiden Seitenteilen 5, 6, sondern zusätzlich auch von der Stützlasche 8 U-förmig umfasst ist. In den Seitenteilen 5, 6 sowie in der Stützlasche 8 vorgesehene Bohrungen 9 ermöglichen das Befestigen des Stützprofils 1 an dem Knotenblech 4, 4' mittels Schraubverbindungen.

Von den Seitenteilen 5, 6 erstrecken sich Seitenlaschen 10, 11 in etwa rechtwinkelig zu der von den Seitenteilen gebildeten Winkelkante K und in der Ebene der Seitenteile 5, 6, wobei jede der Seitenlaschen 10, 11 mit einer Auflagelasche 12, 13 zum Auflegen eines Tragprofils 2 bzw. 3 versehen ist. Die Seitenlasche 11 ist mit einer Decklasche 14, die der Auflagelasche 12 gegenüberliegt, versehen, sodass das hier aufzulagernde Tragprofil 3 U-förmig von der Auflagelasche 12, der Seitenlasche 11 und der Decklasche 14 umfasst ist. Bohrungen 9 dienen wiederum dazu, dieses Tragprofil 3 in einfacher Weise mittels einer Schraubverbindung mit dem Knotenblech 4, 4' zu verbinden.

Die zweite Seitenlasche 10, die am oberen Ende des Knotenbleches 4, 4' vorgesehen ist, weist eine Höhe auf, die nicht größer ist als die Höhe des auf der Auflagelasche 13 zur Anlage gelangenden Tragprofils 2, sodass das Knotenblech 4 bzw. 4'höhenmäßig dieses Tragprofil 2 nicht überragt. Auch hier sind wiederum Bohrungen 9 vorgesehen, die dazu dienen, dieses Tragprofil 2 mit dem Knotenblech 4 bzw. 4' mittels einer Schraubverbindung in einfacher Weise zu verbinden.

Der Übergang der Seitenlaschen 10, 11 zu den Seitenteilen 5, 6 der Knotenbleche 4, 4' ist vorzugsweise abgerundet gestaltet, wodurch jedes Knotenblech 4, 4' neben einer guten Optik auch eine erhöhte Tragkraft aufweist. Die Knotenbleche 4, 4' sind vorzugsweise einstückig aus einem Blech gebogen, sodass bei der Herstellung eines Knotenblechs 4, 4' lediglich Stanz- und Biegearbeiten - neben dem Vorsehen der Bohrungen - anfallen, und keine Schweißarbeiten notwendig sind. Die Knotenbleche 4, 4' sind aus einem möglichst stabilen Blech gebildet, wie z.B. einer Aluminiumlegierung oder aus einem Stahlblech, das gegebenenfalls, sofern es nicht rostfrei ist, beschichtet ist.

Wie insbesondere aus Fig. 1 und den Fig. 6 und 7 zu ersehen ist, sind die Knotenbleche 4, 4' derart spiegelbildlich gegengleich gestaltet, dass durch die Tragprofile 2, 3 ein etwa rechteckiger Rahmen gebildet werden kann. Wie aus den Fig. 3, 6 und 7 zu erkennen ist, überragen die Stützprofile 1 die Knotenbleche 4, 4' und es sind zwei sich in Querrichtung zur Ladefläche eines Lastfahrzeugs erstreckende Tragprofile 2 höhenmäßig über den sich in Längsrichtung der Ladefläche des Lastfahrzeugs erstreckenden Tragprofilen 3 vorgesehen, was bei der Anordnung der Seitenlaschen 10, 11 der Knotenbleche 4, 4' berücksichtigt ist. Da die Knotenbleche 4, 4' die sich in Querrichtung erstreckenden Tragprofile 2 nicht überragen, können diese Tragprofile 2 einwandfrei zur Aufnahme von Langgut dienen. Zur Besfestigung von Langgut oder beispielsweise einer Transporteinrichtung für Langgut können Schnellverschlüsse 15 vorgesehen sein, die entweder an einem Tragprofil 2 oder auch an einem Knotenblech 4' befestigt sind, wobei die Haltebügel 16 der Schnellverschlüsse 15 die Oberkante der sich in Querrichtung erstreckenden Tragprofile 2 überragen.

Die sich in Längsrichtung erstreckenden Tragprofile 3 können selbstverständlich auch zur Auflage von Lasten verwendet werden, sie dienen jedoch in erster Linie zur Aussteifung bzw. zur Abstützung der sich in Querrichtung erstreckenden Tragprofile 2 und der Stützprofile 1. Fig. 6 lässt erkennen, dass die Stützprofile 1 sich nicht genau vertikal erstrecken, sondern leicht zueinander geneigt vorgesehen sind, was bei der Gestaltung der Knotenbleche 4, 4' ebenfalls berücksichtigt ist.

Zum Befestigen des Ladeflächenaufbaus an einer Ladefläche dienen in Fig. 2 dargestellte Fußteile 17, die von einer Bodenplatte 18 und davon aufragenden Seitenteilen 19 gebildet sind. Sowohl die Bodenplatte 18 als auch die Seitenteile 19 weisen wiederum Bohrungen 9 zum mechanischen Befestigen an der Ladefläche bzw. an den Stützprofilen 1 mittels Schraubverbindungen auf. Die sich nach oben erstreckenden Seitenteile 19 des Fußteils 17 umfassen zweckmäßig ein Stützprofil 1 U-förmig, sodass ein besonders guter Halt des Stützprofils 1 gegeben ist.

Wie aus Fig. 2 zu erkennen ist, ist unterhalb des vorzusehenden Stützprofils 1 ebenfalls eine Bohrung 9 vorgesehen, die, wenn der Ladeflächenaufbau am Lastfahrzeug montiert ist, vom Stützprofil 1 überdeckt ist, sodass es nicht so ohne weiteres möglich ist, den Ladeflächenaufbau von der Ladefläche durch Lösen der sichtbaren Schraubverbindungen zu entfernen. Es müssten nämlich vorher zusätzlich die Stützprofile 1 von den Fußteilen 17 entfernt werden, was einen erheblichen Aufwand darstellt.

Fig. 6 lässt weiters erkennen, dass parallel zu einem der sich in Querrichtung erstreckenden Tragprofile 2 ein weiteres Tragprofil 20 vorgesehen ist, das zweckmäßig in einer Höhe an den Stützprofilen 1 befestigt ist, in der die obere Kante einer hinteren Bordwand eines Lastfahrzeugs von diesem Tragprofil 20 überragt wird und auf dieses Tragprofil 20 ebenfalls Langgut aufgelegt werden kann, ohne dass das Öffnen und Schließen der Bordwand behindert wird. Die für das Tragprofil 20 vorgesehene Befestigungseinrichtungen sind in Fig. 4 gezeigt; es handelt sich um weitere Knotenbleche 21 mit ein U-Profil bildenden Seitenteilen 22, 23 mit nur einer von einem Seitenteil 23 auskragenden Seitenlasche 24, an der ebenfalls mittels Schraubverbindungen das Tragprofil befestigt werden kann. Die Seitenteile 22, 23 umfassen das Stützprofil 1U-förmig und werden an diesem ebenfalls mittels Schraubverbindungen befestigt. Dieses Knotenblech kann ebenfalls an der Seitenlasche 24 eine Auflagelasche ähnlich der Auflagelasche 13 für das Tragprofil 20 aufweisen.

Zur Befestigung eines Heckscheibenschutzes 25 an dem Ladeflächenaufbau 1 sind ein Stützprofil 1 U-förmig umgreifende Befestigungsteile 26 vorgesehen, deren Befestigung an den Stützprofilen 1 ebenfalls mittels einer Schraubverbindung verwirklichbar ist. Diese Befestigungsteile 26 sind weiters mit an das Profil des Heckscheibenschutzes 25 angepasste Montagelaschen 27 vorgesehen, an denen der Heckscheibenschutz 25, wie in Fig. 7 veranschaulicht, in einfacher Weise montiert werden kann.

Die Erfindung ermöglicht den einfachen Zusammenbau eines Ladeflächenaufbaus, wobei dieser in Breite, Länge und Höhe an die Ladefläche adaptierbar ist. Es müssen lediglich die Stützprofile 1 und die Tragprofile 2, 3 entsprechend der gewünschten Länge abgelängt werden, die Knotenbleche 4, 4' können dann ganz nach Wunsch mit den Profilen 1, 2, 3 verbunden werden. Die bereits vorhanden Bohrungen 9 sowie die Auflagelaschen 12, 13 ermöglichen eine sehr rasche und einfache Montage des Ladeflächenaufbaus, wobei keinerlei Schweißarbeiten notwendig sind, sodass auch Schweißvor- und -nacharbeiten entfallen. Ein Ladeflächenaufbau kann in einfacher Weise und platzsparend in noch nicht zusammengebautem Zustand verschickt werden, wobei oftmals nur die Knotenbelche 4, 4' und die Fußteile 17 sowie gegebenenfalls Zubehörteile 21, 26 für die Montage eines weiteren Tragprofils 20 oder eines Heckscheibenschutzes 25 versendet werden müssen, zumal viele Betriebe, die einen Ladeflächenaufbau benötigen, selbst über entsprechende Profile 1, 2, 3 verfügen.

## Patentansprüche

1. Knotenblech (4, 4') zum Verbinden von drei im Winkel zueinander stehenden Profilen (1, 2, 3) eines Ladeflächenaufbaus für Lastfahrzeuge, wobei das Knotenblech (4, 4') ein von zwei Seitenteilen (5, 6) gebildetes Winkelprofil mit einer von den Seitenteilen (5, 6) gebildeten Winkelkante (K) zum Befestigen, vorzugsweise zum mechanischen Befestigen, an einem die Vertikalkräfte des Ladeflächenaufbaus in die Ladefläche leitenden Stützprofilen (1) aufweist und wobei das Knotenblech in Verlängerung der beiden Seitenteile (5, 6) Seitenlaschen (10, 11) zum Befestigen, vorzugsweise mechanischen Befestigen, von sich etwa horizontal erstreckenden Tragprofilen (2, 3) aufweist, **dadurch gekennzeichnet, dass** das Knotenblech (4, 4') einstückig aus einem Blechformteil gestaltet ist und wobei jede der Seitenlaschen (10, 11) mit einer Auflagelasche (12, 13) zur Auflage der sich etwa horizontal erstreckenden Tragprofile (2, 3) versehen ist.

2. Knotenblech (4, 4') nach Anspruch 1, **dadurch gekennzeichnet, dass** mindestens eine Seitenlasche (11) eine zur Auflagelasche (12) parallel liegende Decklasche (14) zum U-förmigen Umfassen eines Tragprofils (3) aufweist.

3. Knotenblech (4, 4') nach Anspruch 1 oder 2, **dadurch gekennzeichnet, dass** ein Seitenteil (6) mit einer parallel zum anderen Seitenteil (5) gerichteten Stützlasche (8) zum U-förmigen Umfassen eines Stützprofils (1) versehen ist.

4. Knotenblech (4, 4') nach einem der Ansprüche 1 bis 3, **dadurch gekennzeichnet, dass** die Seitenlaschen (10, 11) in die Seitenteile (5, 6) abgerundet übergehen.

5. Knotenblech (4, 4') nach einem der Ansprüche 1 bis 4, **dadurch gekennzeichnet, dass** die Seitenlaschen (10, 11) an den Seitenteilen (5, 6) in ungleichen Ebenen, d.h. höhenversetzt, angeordnet sind.

6. Knotenblech (4, 4') nach einem der Ansprüche 1 bis 5, **dadurch gekennzeichnet, dass** zum mechanischen Befestigen von Stütz- und/oder Tragprofilen in den Seitenteilen (5, 6) und Seitenlaschen (10, 11) Bohrungen (9) vorhanden sind.

7. Knotenblech (4, 4') nach einem der Ansprüche 1 bis 6, **gekennzeichnet durch** einen an der Außenseite einer Seitenlasche (10) befestigten Schnellverschluss (15), dessen Haltebügel (16) die Oberkante der Seitenlasche (10) überragt.

8. Set zum Selbstbau eines Ladeflächenaufbaus für Lastfahrzeuge unter Verwendung von vier gegengleich gestalteten Knotenblechen (4, 4') nach einem der Ansprüche 1 bis 7 zwecks Aufbau eines von vier Stützprofilen (1) und vier Tragprofilen (2, 3) gebildeten Ladeflächenaufbaus.

9. Set nach Anspruch 8, **dadurch gekennzeichnet, dass** weiters Fußteile (17) für die Stützprofile (1) vorgesehen sind, die an der Ladefläche befestigbare, vorzugsweise mechanisch befestigbare, Bodenplatten (18) und von diesen aufragende, vorzugsweise einen U-Querschnitt aufweisende Seitenteile (19) zur Befestigung, vorzugsweise mechanischen Befestigung, der Stützprofile (1) aufweist.

10. Set nach Anspruch 8 oder 9, **dadurch gekennzeichnet, dass** es weitere Knotenbleche (21) mit vorzugsweise ein U-Profil bildenden Seitenteilen (22, 23) und nur einer von einem Seitenteil auskragenden Seitenlasche (24), von der vorzugsweise eine Auflagelasche auskragt, aufweist.

11. Set nach einem der Ansprüche 8 bis 10, **gekennzeichnet durch** zwei oder mehrere ein Stützprofil (1) vorzugsweise U-förmig umgreifende Befestigungsteile (26) zur Montage eines Heckscheibenschutzes (25).

12. Ladeflächenaufbau, gebildet mit einem Set nach einem der Ansprüche 8 bis 11, **gekennzeichnet durch** vier Stützprofile (1), die über die Knotenbleche (4, 4') nach oben ragen.

13. Ladeflächenaufbau nach Anspruch 12, **dadurch gekennzeichnet, dass** die Knotenbleche (4, 4') höhenmäßig mit sich in Querrichtung zum Lastfahrzeug erstreckenden Tragprofilen (2) enden, d.h. diese höhenmäßig nicht überragen.

14. Ladeflächenaufbau nach Anspruch 12 oder 13, **dadurch gekennzeichnet, dass** sich in Längsrichtung des Lastfahrzeuges erstreckende Tragprofile (3) tiefer vorgesehen sind als sich quer zur Längsrichtung des Lastfahrzeugs erstreckende Tragprofile (2).

## Claims

1. A gusset plate (4, 4') for connecting three sections (1, 2, 3), positioned at an angle to each other, of a loading platform arrangement for trucks, wherein the gusset plate (4, 4') has an angle section formed by two side parts (5, 6) having an angle edge (K) formed by one of the side parts (5, 6) for fastening, preferably mechanical fastening, to a supporting section (1) transmitting the vertical forces of the loading platform arrangement into the loading platform and wherein the gusset plate (4, 4') in extension of the two side parts (5, 6) has lateral splices (10, 11) for fastening, preferably mechanical fastening, of approximately horizontally extending girder sections (2, 3), **characterized in that** the gusset plate (4, 4') is formed integrally of a sheet metal part and wherein each of the splices (10, 11) is provided with a support splice (12, 13) for supporting the horizontally extending girder sections (2, 3).

2. A gusset plate (4, 4') according to claim 1, **characterized in that** at least one lateral splice (11) has a cover splice (14) in parallel to the support splice (12) for embracing a girder section (3) in a U-form.

3. A gusset plate (4, 4') according to claim 1 or 2, **characterized in that** a side part (6) is provided with a supporting splice (8) in parallel to another side part (5) for embracing a supporting section (1) in a U-form.

4. A gusset plate (4, 4') according to any of claims 1 to 3, **characterized in that** the lateral splices (10, 11) merge into the side parts (5, 6) in a rounded-off form.

5. A gusset plate (4, 4') according to any of claims 1 to 4, **characterized in that** the lateral splices (10, 11) are arranged at the side parts (5, 6) in different planes, this is, offset in height.

6. A gusset plate (4, 4') according to any of claims 1 to 5, **characterized in that** there are provided bores (9) in the side parts (5, 6) and lateral splices (10, 11) for the mechanical fastening of supporting and/or girder sections.

7. A gusset plate (4, 4') according to any of claims 1 to 6, **characterized by** a quick release fastener (15) fastened to the external surface of a lateral splice (10), wherein the retaining bracket (16) of which projects beyond the upper edge of the lateral splice (10).

8. A set for the do-it-yourself assembly of a loading platform arrangement for trucks using four gusset plates (4, 4') of opposite forms according to any of claims 1 to 7 for the assembly of a loading platform arrangement formed by four supporting sections (1) and four girder sections (2, 3).

9. A set according to claim 8, **characterized in that** there are further provided stand supports (17) for the supporting sections (1), which have base plates (18) that may be fastened to the loading platform, preferably mechanically fastened, and side parts (19) extending from these, preferably having a U-shaped cross-section, for fastening, preferably mechanical fastening, of the supporting sections (1).

10. A set according to claim 8 or 9, **characterized in that** it includes further gusset plates (21) with side parts (22, 23) preferably forming a U-section and a lateral splice (24) projecting from only one side part, from which preferably a support splice projects.

11. A set according to any of claims 8 to 10, **characterized by** two or several fastening parts (26) embracing a supporting section (1) preferably in a U-form for mounting a rear windows protection (25).

12. A loading platform arrangement, formed with a set according to any of claims 8 to 11, **characterized by** four supporting sections (1), which project upwards beyond the gusset plates (4, 4').

13. A loading platform arrangement according to claim 12, **characterized in that** the gusset plates (4, 4') end in their heights in girder sections (2) extending in the transversal direction to the truck, this is, not exceeding height thereof.

14. A loading platform arrangement according to claim 12 or 13, **characterized in that** girder sections (3) are provided in the longitudinal direction of the truck in a deeper height than girder sections (2) extending transversally to the longitudinal direction of the truck.

## Revendications

1. Plaque gousset (4, 4') pour relier trois profilés disposés en angle les uns par rapport aux autres (1, 2, 3) d'une superstructure de surface de chargement pour camions, dans laquelle la plaque gousset (4, 4') comprend un profilé en équerre formé par deux parties latérales (5, 6) avec une arête d'équerre (K) formée par les parties latérales (5, 6), pour la fixation, de préférence pour la fixation mécanique, sur un profilé de soutien (1) qui transmet les forces verticales de la superstructure de surface de chargement vers la surface de chargement, et dans laquelle la plaque gousset comprend, dans le prolongement des deux parties latérales (5, 6), des pattes latérales (10, 11) pour la fixation, de préférence pour la fixation mécanique, de profilés porteurs (2, 3) s'étendant approximativement horizontalement, **caractérisée en ce que** la plaque gousset (4, 4') est conçue d'une seule pièce à partir d'une pièce conformée en tôle, dans laquelle chacune des pattes latérales (10, 11) est pourvue d'une patte d'appui (12, 13) pour l'appui des profilés porteurs (2, 3) s'étendant approximativement horizontalement.

2. Plaque gousset (4, 4') selon la revendication 1, **caractérisée en ce qu'**au moins une patte latérale (11) comprend une patte de couverture (14), disposée parallèlement à la patte d'appui (12) pour enserrer en forme de U un profilé porteur (3).

3. Plaque gousset (4, 4') selon la revendication 1 ou 2, **caractérisée en ce qu'**une partie latérale (6) est pourvue d'une patte de soutien (8) orientée parallèlement à l'autre partie latérale (5) pour enserrer en forme de U un profilé de soutien (1).

4. Plaque gousset (4, 4') selon l'une des revendications 1 à 3, **caractérisée en ce que** les pattes latérales (10, 11) se transforment par un arrondi vers les parties latérales (5, 6).

5. Plaque gousset (4, 4') selon l'une des revendications 1 à 4, **caractérisée en ce que** les pattes latérales (10, 11) sont agencées sur les parties latérales (5, 6) dans des plans inégaux, c'est-à-dire décalées en hauteur.

6. Plaque gousset (4, 4') selon l'une des revendications 1 à 5, **caractérisée en ce que** des perçages (9) sont prévus dans les parties latérales (5, 6) et dans les pattes latérales (10, 11) pour la fixation mécanique de profilés de soutien et/ou de profilés porteurs.

7. Plaque gousset (4, 4') selon l'une des revendications 1 à 6, **caractérisée par** une fermeture rapide (15), fixée sur la face extérieure d'une patte latérale (10), dont l'arceau de maintien (16) dépasse au-delà de l'arête supérieure de la patte latérale (10).

8. Kit pour la réalisation autonome d'une superstructure de surface de chargement en utilisant quatre plaques goussets (4, 4') de conception identique et symétrique selon l'une des revendications 1 à 7 dans le but de la réalisation d'une superstructure de surface de chargement formée de quatre profilés de soutien (1) et de quatre profilés supports (2, 3).

9. Kit selon la revendication 8, **caractérisé en ce qu'**il est prévu en outre des pièces de pied (17) pour les profilés de soutien (1) qui comprennent chacune une plaque de fond (18) fixée à la surface de chargement, de préférence fixée par voie mécanique, et des parties latérales (19) dépassant de ces dernières, présentant de préférence une section transversale en U, pour la fixation, de préférence pour la fixation mécanique, des profilés de soutien (1).

10. Kit selon la revendication 8 ou 9, **caractérisé en ce qu'**il comprend d'autres plaques goussets (21) avec des parties latérales (22, 23) formant de préférence un profil en U, et seulement une patte latérale (24) en porte-à-faux depuis une partie latérale et depuis laquelle dépasse de préférence une patte d'appui, également en porte-à-faux.

11. Kit selon l'une des revendications 8 à 10, **caractérisé par** deux ou plusieurs pièces de fixation (26) qui enserrent un profilé de soutien (1), de préférence en forme de U, pour le montage d'une protection pour vitre arrière (25).

12. Superstructure de surface de chargement, réalisée avec un kit selon l'une des revendications 8 à 11, **caractérisée par** quatre profilés de soutien (1) qui dépassent vers le haut au-delà des plaques goussets (4, 4').

13. Superstructure de surface de chargement selon la revendication 12, **caractérisée en ce que** les plaques goussets (4, 4') se terminent en hauteur avec des profilés porteurs (2) s'étendant en direction transversale par rapport au camion, c'est-à-dire sans dépasser ceux-ci en hauteur.

14. Superstructure de surface de chargement selon la revendication 12 ou 13, **caractérisée en ce qu'**il est prévu des profilés porteurs (3), s'étendant en direction longitudinale du camion, situés plus profondément que des profilés porteurs (2) s'étendant transversalement à la direction longitudinale du camion.
